# EUROPEAN PATENT SPECIFICATION

(11) **EP 2 115 969 B1**
(45) Date of publication and mention of the grant of the patent: **03.06.2015**
(21) Application number: 08710005.3
(22) Date of filing: 12.02.2008
(51) Int. Cl.: H04W 36/00, H04W 92/20

(54) **METHOD AND APPARATUS PROVIDING INTER-NODE B SIGNALLING OF CELL STATUS INFORMATION**
VERFAHREN UND VORRICHTUNG FÜR INTER-KNOTEN-B-SIGNALISIERUNG VON ZELLSTATUSINFORMATIONEN
PROCÉDÉ ET APPAREIL FOURNISSANT UNE SIGNALISATION ENTRE DES NOEUDS B D'INFORMATIONS D'ÉTAT DE CELLULE

(30) Priority: 12.02.2007 US 901700 P
(43) Date of publication of application: 11.11.2009
(73) Proprietor: Nokia Technologies Oy, 02610 Espoo (FI)
(72) Inventor: NAKAMATA, Masatoshi, London SE1 8HP (GB); HWANG, Woonhee, FI-02180 Espoo (FI)
(74) Representative: Nokia Corporation
(86) International application number: PCT/IB2008/050504
(87) International publication number: WO 2008/099340

(56) References cited:
- US-A1- 2002 151 304
- 3GPP TSG-RAN WG2 MEETING #55 ET AL: "LTE Handover preparation" 3RD GENERATION PARTNERSHIP PROJECT (3GPP); TECHNICALSPECIFICATION (TS), XX, XX, vol. TDOC R2-062887, 9 October 2006 (2006-10-09), pages 1-5, XP002469235
- "UNIVERSAL MOBILE TELECOMMUNICATIONS SYSTEM (UMTS); FEASIBILITY STUDY FOR EVOLVED UNIVERSAL TERRESTRIAL RADIO ACCESS (UTRA) AND UNIVERSAL TERRESTRIAL RADIO ACCESS NETWORK (UTRAN) (3GPP TR 25.912 VERSION 7.1.0 RELEASE 7)" ETSI STANDARDS, LIS, SOPHIA ANTIPOLIS CEDEX, FRANCE, no. V7.1.0, 1 January 2006 (2006-01-01), pages 1-58, XP014035381 ISSN: 0000-0001

## Description

### TECHNICAL FIELD:

The exemplary and non-limiting embodiments of this invention relate generally to wireless communication systems, methods, devices and computer program products and, more specifically, relate to techniques related to cell or eNB operational mode and capability exchange.

### BACKGROUND:

Various abbreviations that appear in the specification and/or in the drawing figures are defined as follows:
- 3GPP: third generation partnership project
- ARQ: automatic repeat request
- AS: access stratum
- AM: acknowledge mode
- CRC: cyclic redundancy check
- DL: downlink
- EUTRAN: evolved UTRAN
- eNB: EUTRAN Node B
- HARQ: hybrid ARQ
- HO: handoff (handover)
- UE: user equipment
- UTRAN: universal terrestrial radio access network
- UL: uplink
- LTE: long term evolution
- MAC: medium access control
- MBMS: multimedia broadcast multicast service
- MME: mobility management entity
- NAS: non-access stratum
- Node B: base station
- OFDM: orthogonal frequency division multiplexing
- PDCP: packet data convergence protocol
- PDU: protocol data unit
- RAT: radio access technology
- RB: radio bearer
- RRC: radio resource control
- RLC: radio link control
- SC-FDMA: single carrier frequency division multiple access
- SDU: service data unit
- SRB: signaling radio bearer
- TM: transparent mode
- UM: un-acknowledge mode
- UPE: user plane entity

A proposed communication system known as evolved UTRAN (E-UTRAN, also referred to as UTRAN-LTE or as E-UTRA) is currently under discussion within the 3GPP. The assumption is that the DL access technique will be OFDM, and the UL access technique will be SC-FDMA using cyclic prefixes to achieve UL inter-user orthogonality.

Two publications of interest to the following discussion are 3GPP TS 36.300, V0.5.0 (2007-02), 3rd Generation Partnership Project, Technical Specification Group Radio Access Network, Evolved Universal Terrestrial Radio Access (E-UTRA) and Evolved Universal Terrestrial Radio Access Network (E-UTRAN) Overall description Stage 2 (Release 8), and 3GPP TR R3.018, V0.6.0 (2006-10), 3rd Generation Partnership Project, Technical Specification Group Radio Access Network, Evolved UTRA and UTRAN Radio Access Architecture and Interfaces (Release 7).

Figure 1 reproduces Figure 4 of 3GPP TS 36.300, and shows the overall EUTRAN architecture, where eNBs 12 communicate with MME/UPE entities 14 via an S1 interface 13, and communicate with one another via X2 interfaces 15.

Figure 2 reproduces Figure 10.1.2.1 of 3GPP TS 36.300, and shows the signal flow and entities involved in an intra-MME/UPE HO of a UE 10. Figure 2 illustrates the signal flow in relation to the UE 10, a source which may be currently serving an eNB 12, a target eNB 12', and the MME/UPE 14.

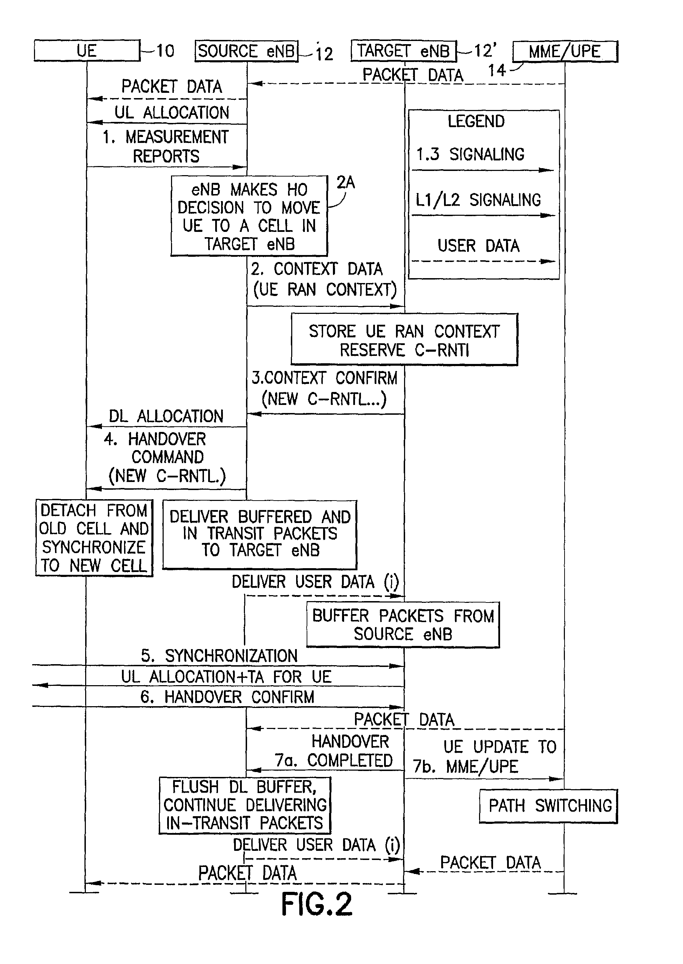

A problem that is presented during the HO scenario depicted in Figure 2 is that the source eNB 12 does not have information regarding the availability and capability of cells under control of neighboring eNBs. As a result the source eNB 12 may send the target eNB 12' a request to execute a HO of the UE 10 to the cell of a target eNB which, however, the target eNB 12' is not able to accept for some reason. For example, the cell may not be available (e.g., due to a hardware failure or planned cell shutting down for certain time in a day), or may be unavailable for lack of support of some required feature needed by the UE 10 after the HO. In this case the source eNB 12 may expect to receive a failure message from the target eNB 12'.

As may be appreciated, this type of operation can delay the HO execution or fail the HO, and can also degrade performance due at least to an increase of potentially unnecessary signaling on the X2 interface.

"LTE Handover preparation"; 3RD GENERATION PARTNERSHIP PROJECT (3GPP); TECHNICAL SPECIFICATION (TS), describes the preparation for handover between a source eNnodeB and a target eNodeB and describes the signalling that takes place between the source eNodeB and target eNodeB once the source eNodeB has requested that handover take place. "UNIVERSAL MOBILE TELECOMMUNICATIONS SYSTEM (UMTS)L FEASIBILITY STUDY FOR EVOLVED UNIVERSAL TERRESTRIAL RADIO ACCESS (UTRA) AND UNIVERSAL TERRESTRIAL RADIO ACCESS NETWORK (UTRAN) (3GPP TR 25.912 VERSION 7.1.0 RELEASE 7)", describes evolved UTRA and UTRAN and in particular a signalling flow between a source eNodeB requesting handover to a target eNodeB. US 2002/151304 A1 describes transmission of candidate cell filtering on Iur interface.

### SUMMARY:

According to a first aspect, there is provided a method, comprising: receiving information at a second access node from a first access node over an X2 interface where the information regards at least one of availability and capability to support one or more features of a first cell controlled by the first access node that is neighbour to a second cell controlled by the second access node; and using the received information at a second access node during at least one of: initiating a handover wherein the second access node considers the received information when making a determination of a suitable target cell for a handover; and a radio resource control (RRC) related operation; the method further comprising: receiving the information periodically or as a result of a triggering event.

According to a second aspect, there is provided an access node, comprising: an X2 interface configured to receive information regarding at least one of availability and capability to support one or more features of a first cell controlled by a further access node that is neighbor to a second cell controlled by the access node; and a processor; configured to use the received information during at least one of: a handover when making a determination of a target access node for the handover; and a radio resource control (RRC) related operation; wherein the information is received periodically or as a result of a triggering event.

According to a third aspect, there is provided a method, comprising: determining information at a first access node corresponding to a first cell associated with the first access node, where the information is regarding at least one of availability and capability to support one or more features of the first cell, controlled by the first access node, that is neighbor to a second cell controlled by a second access node; and sending the information to the second access node over an X2 interface sending the information periodically or as a result of a triggering event wherein the triggering event is one of an occurrence of a hardware failure in one or more cells controlled by the first access node, an occurrence of a previous hardware failure being remediated, a change in total cell loading and a change in cell loading per type of service class.

According to a fourth aspect, there is provided an access node comprising: a processor configured to determine information corresponding to a first cell associated with said access node, where the information is regarding at least one of availability and capability to support one or more features of the first cell, controlled by the access node, that is neighbor to a second cell controlled by a further access node; and an X2 interface configured to send the information to the further access node periodically or as a result of a triggering event wherein the triggering event is one of an occurrence of a hardware failure in one or more cells controlled by the first access node, an occurrence of a previous hardware failure being remediated, a change in total cell loading and a change in cell loading per type of service class

### BRIEF DESCRIPTION OF THE DRAWINGS:

The foregoing and other aspects of embodiments of this invention are made more evident in the following Detailed Description, when read in conjunction with the attached Drawing Figures, wherein:

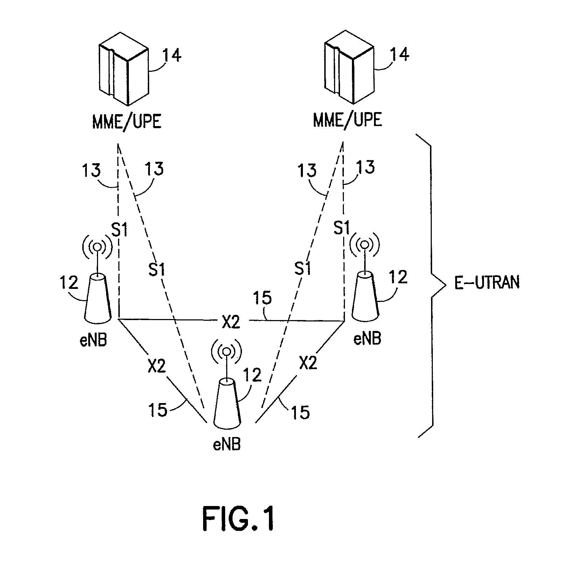

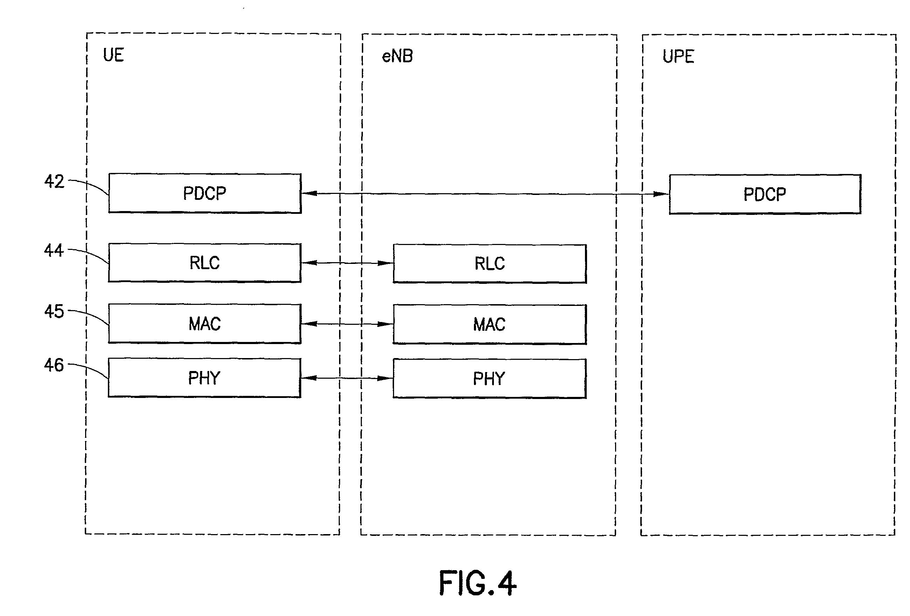

Figure 1 reproduces Figure 4 of 3GPP TS 36.300, and shows an overall EUTRAN architecture;

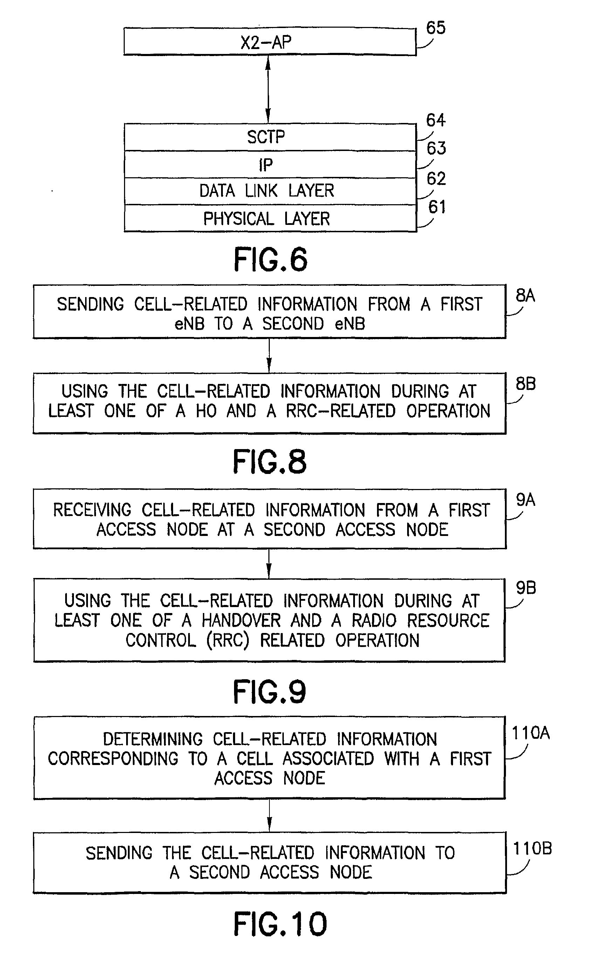

Figure 2 reproduces Figure 10.1.2.1 of 3GPP TS 36.300, and shows a signal flow and the entities involved in an intra-MME/UPE HO of a UE;

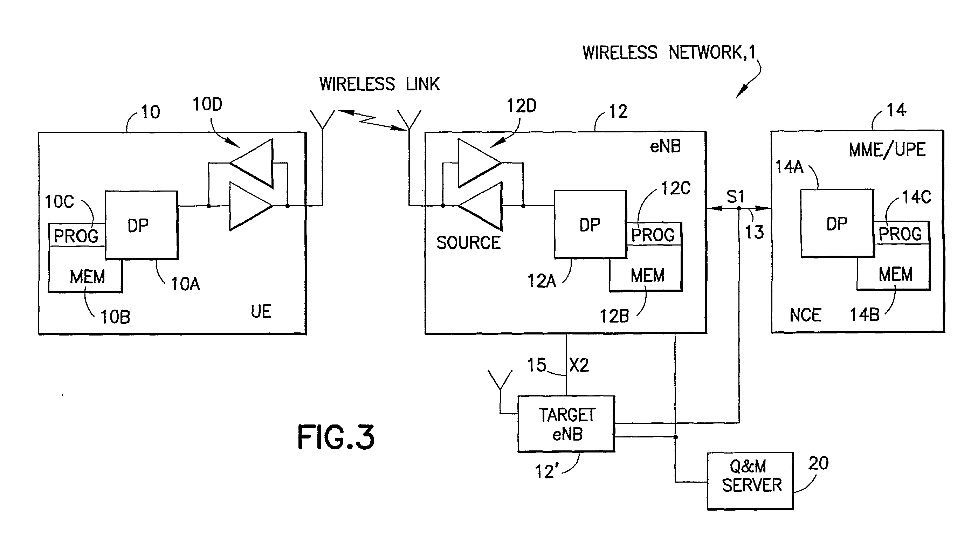

Figure 3 illustrates a simplified block diagram of various electronic devices that are suitable for use in practicing the exemplary embodiments of this invention;
Figure 4 reproduces Figure 4.3.1 of 3GPP TS 36.300 and illustrates auser-plane protocol stack;

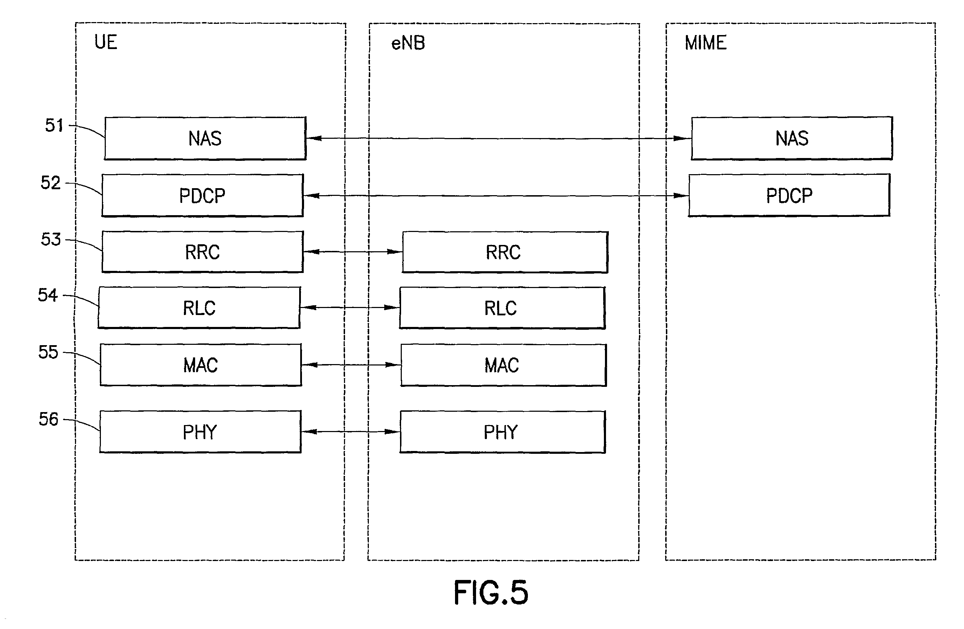

Figure 5 reproduces Figure 4.3.2 of 3GPP TS 36.300 and illustrates a control-plane protocol stack;
Figure 6 reproduces Figure 20.2 of 3GPP TS 36.300 and illustrates an X2 interface control plane;

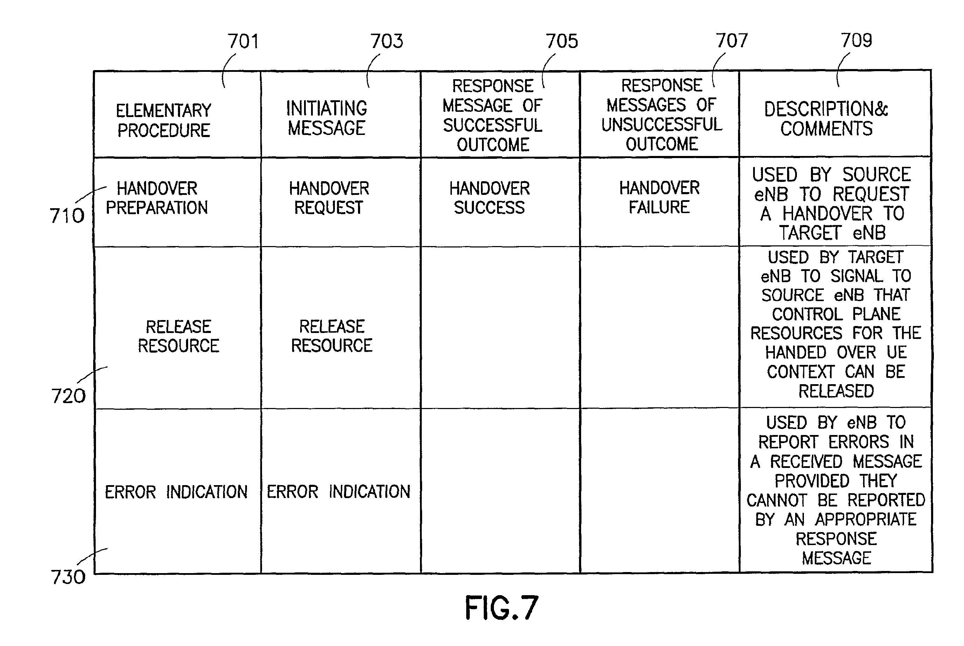

Figure 7 reproduces Figure 20.2.2 of 3GPP TS 36.300 and shows in table form X2 control plane procedures;
Figure 8 shows a logic flow diagram of a method in accordance with the exemplary embodiments of this invention;
Figure 9 shows in a logic flow diagram another method in accordance with the exemplary embodiments of the invention; and
Figure 10 illustrates in a logic flow diagram yet another method in accordance with the exemplary embodiments of the invention.

### DETAILED DESCRIPTION:

The exemplary embodiments of this invention relate to 3 GPP LTE radio access, and more specifically to signaling related to the inter-eNB X2 interface.

Reference is made to Figure 3 for illustrating a simplified block diagram of various electronic devices that are suitable for use in practicing the exemplary embodiments of this invention. In Figure 3 a wireless network 1 (assumed for this example to be an EUTRAN network) is adapted for communication with a UE 10 via an access node such as a Node B (base station) 12 (also referred to herein as eNB 12). The network 1 may include a network control element (NCE), which may represent or comprise the MME/UPE 14. The UE 10 includes a data processor (DP) 10A, a memory (MEM) 10B that stores a program (PROG) 10C, and a suitable radio frequency (RF) transceiver 10D for bidirectional wireless communications with the eNB 12, which also includes a DP 12A, a MEM 12B that stores a PROG 12C, and a suitable RF transceiver 12D. The eNB 12 is coupled via a data path, the S1 interface 13, to the MME/UPE 14, that also includes at least one DP 14A and MEM 14B storing an associated PROG 14C.

Shown for completeness in Figure 3 is at least one second eNB referred to as 12' (which may be considered to be a neighbor eNB). During a HO event the eNB 12 may be considered the source eNB, i.e., the eNB to which the UE 10 is currently connected and communicating in the associated serving cell, and the eNB 12' may be considered the target eNB, i.e., the eNB to which the UE 10 may be connected and communicating with in the target cell after the HO procedure is completed. The eNB 12' can be considered for this discussion to be constructed similarly to the eNB 12. The eNBs 12, 12' are communicatively coupled together via the X2 interface 15.

At least the eNB PROGs 12C are assumed to include program instructions that, when executed by the associated DP, enable the electronic device to operate in accordance with the exemplary embodiments of this invention, as will be discussed below in greater detail.

That is, the exemplary embodiments of this invention may be implemented at least in part by computer software executable by the DP 12A of the eNBs 12, 12', or by hardware, or by a combination of software and hardware.

In general, the various embodiments of the UE 10 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The MEMs 10B, 12B and 14B may be of any type suitable to the local technical environment and may be implemented using any suitable data storage technology, such as semiconductor-based memory devices, magnetic memory devices and systems, optical memory devices and systems, fixed memory and removable memory. The DPs 10A, 12A and 14A may be of any type suitable to the local technical environment, and may include one or more of general purpose computers, special purpose computers, microprocessors, digital signal processors (DSPs) and processors based on a multi-core processor architecture, as non-limiting examples.

In accordance with the exemplary embodiments of this invention the eNBs 12, 12' exchange cell-related information over the X2 interface 15. The cell-related information can include information regarding the cell's availability, its capability to support one or more features and, in general, any information that may potentially influence a determination of an appropriate target eNB by the source eNB during a HO event.

Further in accordance with the exemplary embodiments of the invention the eNB 12, 12' accumulate or determine information pertaining to one or more cells that are controlled by the eNB 12, 12', respectively. This information may be used in creating the cell-related information that is exchanged.

Note that the exchanged information may be only for cells which are neighboring to a cell controlled by the neighboring eNB. That is, if one assumes that there are X cells controlled by a particular eNB, the exchanged information may pertain to possibly only one of the X cells that happens to be a neighbor cell to cells controlled by another eNB.

The signaling load on the X2 interface 15 due to operation of the exemplary embodiments of this invention may be modest, and the cell-related information may be sent based on an occurrence of a triggering event, or it may be sent periodically, or it may be sent based on both approaches. Non-limiting examples of triggering events may include an occurrence of a hardware failure in one or more cells controlled by an eNB, an occurrence of a previous hardware failure being remediated, and/or a change in cell loading (either total cell loading or load per particular type(s) of service classes).

The eNB 12, 12' which receives information that the cell under the neighboring eNB is not available, or that some feature is not supported in the cell, would consider this information when making a determination of one or more suitable candidate target eNBs (see Block 2A in Figure 2), and in this case need not send a message to initiate a HO to that cell, or it may initiate the HO but with a request (to the UE 10) not to execute a feature or features that are not supported in that cell.

Further by example, the eNB 12, 12' may also use the received information for RRC operations, such as removal of a cell which is reported as not available from neighboring cell information in RRC messaging to the UE 10. Further, if a cell is not in an operational mode, or is not suitable for supporting the services on-going with the UE 10, and is thus not a viable HO candidate, the cell can be removed from the neighbor cell list to prevent the UE 10 from making measurements of that cell, thereby conserving UE 10 power and also reducing unnecessary uplink signaling.

As an alternative to using the X2 interface 15 for exchanging cell-related information, the eNB 12, 12' may report the information regarding a cell or cells under the eNB to another entity, such as an O&M (operations and maintenance) server 20, and the O&M server 20 in this case can report the information to the neighboring eNB. Note, however, that reception of a report via the O&M server 12 may have greater latency than using the X2 interface 15. Further, since the interface between the O&M server 20 and the eNB 12, 12' is a vendor-specific interface, while the X2 15 is open interface, in a certain multi-vendor deployment one may not be able to guarantee that cell-related information reporting via the O&M server 20 is compatible.

It is also within the scope of the exemplary embodiments to use both cell-related information reporting techniques, i.e., to report some information via the X2 interface (perhaps information where a longer latency time would be a disadvantage), and to report other cell-related information (perhaps less time critical) via another agency, such as the O&M server 20 or other device.

Advantages that are realized by the use of the exemplary embodiments of this invention include, but are not limited to, reducing HO execution time, reducing the signaling load related to unsuccessful HO and/or RRC related procedures, and reducing the need of the UE 10 to measure unnecessary cells (those that are not viable HO candidates). In addition, information exchanged via the X2 interface may be used for collecting and reporting statistical information or for facilitating other O&M related procedures.

In Figure 4, which reproduces Figure 4.3.1 of 3GPP TS 36.300 there is illustrated the protocol stack of the user-plane. As shown in Figure 4 there is the physical 46 sublayer and the RLC 44 and MAC 45 sublayers that can be terminated in the eNB on the network side. The user-plane protocol stack performs functions including scheduling, ARQ and HARQ. The PDCP 42 sublayer can be terminated in the UPE on the network side and can at least perform for the user plane the functions including header compression and ciphering.

The main services and functions of the MAC sublayer can include mapping between logical channels and transport channels, multiplexing and/or demultiplexing of RLC PDUs belonging to one or different radio bearers into/from transport blocks (TB) delivered to/from the physical layer on transport channels, traffic volume measurement reporting, error correction through HARQ, priority handling between logical channels of one UE, priority handling between UEs by means of dynamic scheduling, transport format selection, mapping of Access Classes to Access Service Classes, and padding.

Further, it is noted that different kinds of data transfer services are offered with the MAC. Each logical channel type is defined by what type of information is transferred. A general classification of logical channels can be assigned into two groups being control channels for the transfer of control plane information, and traffic channels for the transfer of user plane information. In addition, the control channels can be used for transfer of control plane information. The control channels offered in the MAC include Broadcast Control Channel (BCCH) which is a downlink channel for broadcasting system control information, and Paging Control Channel (PCCH) which is a downlink channel that transfers paging information. This channel can be used when the network does not know the location cell of the UE.

In addition the main services and functions of the RLC sublayer can include transfer of upper layer PDUs supporting AM or UM, TM data transfer, error correction through ARQ where a CRC check can be provided by the physical layer such that no CRC is needed at an RLC level, segmentation according to the size of the TB, however this may be needed if an RLC SDU does not fit entirely into the TB. The segmentation process can include that the RLC SDU is segmented into variable sized RLC PDUs which may or may not include any padding.

The main services and functions of the PDCP sublayer can include header compression and decompression, transfer of user data where the transmission of user data means that the PDCP receives PDCP service data units (SDU) from the NAS and forwards them to the RLC layer, reordering of the downlink RLC SDUs at least during inter-eNB mobility, in-sequence delivery of upper layer PDUs at HO in the uplink, duplicate detection of lower layer SDUs, ciphering of user plane data and control plane data (NAS signaling), and integrity protection of control plane data (NAS signaling). It is noted that the UP and CP PDCP entities can be located in the UPE and MME, respectively. Further, it is noted that it has been submitted that the PDCP entities can also be located and/or terminated in the eNB.

A protocol stack for a radio control-plane is illustrated in Figure 5 whichreproduces Figure 4.3.2 of 3GPP TS 36.300. As illustrated in Figure 5 the RRC 53 is terminated in the eNB on the network side. Further, in Figure 5 the RLC 54 and MAC 55 sub-layers terminate in the eNB on the network side and perform functions including scheduling, ARQ, and HARQ. In addition, although not illustrated in Figure 4 it is noted that it has been submitted that the PDCP sub-layer can also be terminated in the eNB on the network side. In addition, the PDCP sub-layer 52 performs functions for the control plane including integrity protection and ciphering. Further, the NAS control protocol 51 is terminated in the MME on the network side and includes functions of authentication and security control for signaling.

As presented in 3GPP TS 36.300 the main services and functions of the RRC 53 include, but may not be limited to, broadcast, paging, RRC connection management, RB control, mobility functions, UE measurement reporting and control broadcast of system Information related to the non-access stratum (NAS), broadcast of system information related to the access stratum (AS); establishment, maintenance and release of an RRC connection between the UE and E-UTRAN including allocation of temporary identifiers between UE and E-UTRAN, configuration of signaling radio bearer(s) for RRC connection, and low priority SRB and high priority SRB. In addition functions of the RRC include security functions such as integrity protection for RRC messages and ciphering for RRC messages; establishment, configuration, maintenance and release of point to point radio bearers; mobility functions including UE measurement reporting and control of the reporting for inter-cell and inter-RAT mobility, Inter-cell handover, UE cell selection and reselection and control of cell selection, and reselection and context transfer between eNBs; possibly notification for MBMS services; establishment, configuration, maintenance and release of radio bearer's for MBMS services; QoS management functions; UE measurement reporting and control of the reporting; MBMS control; and NAS direct message transfer to/from NAS from/to UE.

In Figure 6 there is illustrated an X2 interface control plane protocol. Figure 6 reproduces Figure 20.2 of 3GPP TS 36.300 which illustrates the control plane protocol stack of the X2 interface. The X2 interface control plane (X2-CP) is defined between two neighbor eNBs. The base layers of the X2 control plane protocol stack include the data link layer 62 and the physical layer 61. The transport network layer is built on SCTP 64 on top of IP 53. The X2 application layer signaling protocol is illustrated as X2-AP 65 and is referred to as the X2 Application Protocol.

The X2 application protocol (AP) supports the functions including Intra and/or Inter LTE-Access-System mobility support for UE for context transfer from source eNB to target eNB and for control of user plane tunnels between source eNB and target eNB. The X2-AP may also support general X2 management and error handling/indication functions.

In Figure 7 there is illustrated in table form some elementary X2 control plane procedures supported by the X2 application protocol. Figure 7 reproduces Table 20.2.2 of 3GPP TS 36.300. In the first column elementary procedures 701 which include handover preparation 710, release resource 720, and error indication 730. Further, there are subsequent columns of associated message types pertaining to the procedures. These message types include initiating message 703, response message of successful outcome 705, and response messages of unsuccessful outcome 707. Further, in a last column there is description and comments 709. Then in correlation with these rows and columns there are messages and descriptions. In addition, it is noted that dashes are used in Figure 7 to illustrate that the correlated row and column location may not be applicable.

Based on the foregoing it should be apparent that the exemplary embodiments of this invention include a method, apparatus, and computer program product(s) to send, as in Figure 8, Block 8A, cell-related information from a first eNB to a second eNB; and in Block 8B to use the cell-related information during at least one of a HO and a RRC-related operation.

In addition, based on the forgoing it can also be seen that the exemplary embodiments of the invention include a method, apparatus, and computer program product(s) comprising, as in Figure 9, receiving cell-related information from a first access node at a second access node 9A, and using the cell-related information during at least one of a handover and a radio resource control (RRC) related operation 9B.

Moreover, based on the foregoing it should be apparent that the exemplary embodiments of this invention include a method, apparatus, and computer program product(s) for, as in Figure 10, determining cell-related information corresponding to a cell associated with a first access node 110A, and sending the cell-related information to a second access node 110B.

The method, apparatus and computer program product(s) as in the preceding paragraph, where the cell-related information is sent over an X2 interface or is sent via an external agency, such as an O&M server.

The method, apparatus and computer program product(s) as in the preceding paragraphs, where the cell-related information is used by a recipient eNB when making a determination of a target eNB for HO.

The method, apparatus and computer program product(s) as in the preceding paragraphs, where the cell-related information is used by a recipient eNB for RRC purposes.

The method, apparatus and computer program product(s) as in the preceding paragraphs, where the cell-related information is sent in response at least to at least one of an occurrence of a triggering event, or is sent periodically.

The various blocks shown in Figures 8, 9, and 10 may be viewed as method steps, and/or as operations that result from operation of computer program code, and/or as a plurality of coupled logic circuit elements constructed to carry out the associated function(s).

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the inventions may be practiced in various components such as integrated circuit chips and modules. The design of integrated circuits is by and large a highly automated process. Complex and powerful software tools are available for converting a logic level design into a semiconductor circuit design ready to be fabricated on a semiconductor substrate. Such software tools can automatically route conductors and locate components on a semiconductor substrate using well established rules of design, as well as libraries of pre-stored design modules. Once the design for a semiconductor circuit has been completed, the resultant design, in a standardized electronic format (e.g., Opus, GDSII, or the like) may be transmitted to a semiconductor fabrication facility for fabrication as one or more integrated circuit devices.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, while the exemplary embodiments have been described above in the context of the E-UTRAN (UTRAN-LTE) system, it should be appreciated that the exemplary embodiments of this invention are not limited for use with only this one particular type of wireless communication system, and that they may be used to advantage in other wireless communication systems.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

Further, the term "coupled" as used herein is not intended to be limited to a direct connection between recited components, but encompasses a disposition wherein there may be one or more intervening components or elements between the recited ones.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A method, comprising:
receiving information at a second access node (12) from a first access node (12') over an X2 interface wherein the information regards at least one of availability and capability to support one or more features of a first cell controlled by the first access node (12') that is neighbour to a second cell controlled by the second access node (12); and
using the received information at a second access node (12) during at least one of:
initiating a handover wherein the second access node (12) considers the received information when making a determination of a suitable target cell for a handover; and
a radio resource control 'RRC' related operation; the method further comprising:
receiving the information periodically or as a result of a triggering event.

2. The method of claim 1 wherein the triggering event is one of an occurrence of a hardware failure in one or more cells controlled by the first access node, an occurrence of a previous hardware failure being remediated, a change in total cell loading and a change in cell loading per type of service class.

3. The method of claim 1 or 2, where the received information is used during the RRC-related operation and the RRC-related operation is a removal of the first cell from a cell list based on the received information.

4. The method of claim 1 or 2, where the received information comprises information that a feature is not supported by the first cell and where the received information is used to initiate a handover to the first cell with a request not to execute the feature not supported.

5. The method of any preceding claim embodied in a program stored on a computer readable medium and executable by a processor.

6. An access node (12), comprising:
an X2 interface configured to receive information regarding at least one of availability and capability to support one or more features of a first cell controlled by a further access node (12') that is neighbor to a second cell controlled by the access node (12); and
a processor configured to use the received information during at least one of:
a handover when making a determination of a target access node for the handover; and
a radio resource control ,RRC, related operation; wherein the information is received periodically or as a result of a triggering event.

7. The access node of claim 6 wherein the triggering event is one of an occurrence of a hardware failure in one or more cells controlled by the first access node, an occurrence of a previous hardware failure being remediated, a change in total cell loading and a change in cell loading per type of service class.

8. The access node (12) of claim 6, where the information comprises information that the first cell is not available.

9. The access node (12) of claim 6, where the received information is used during the RRC-related operation and the RRC-related operation is a removal of the first cell from a cell list based on the received information.

10. The access node (12) of claim 6, where the received information comprises information that a feature is not supported by the first cell and where the information is used to initiate a handover to the first cell with a request not to execute the feature not supported.

11. The access node (12) of claim 6, where the received information is considered when making a determination of a suitable target cell for a handover.

12. The access node (12) of claim 6, where the received information is used in place of sending a message to initiate a handover to a suitable target cell.

13. A method, comprising:
determining information at a first access node (12') corresponding to a first cell associated with the first access node (12'), where the information is regarding at least one of availability and capability to support one or more features of the first cell, controlled by the first access node (12'), that is neighbor to a second cell controlled by a second access node (12);
sending the information to the second access node (12) over an X2 interface;
sending the information periodically or as a result of a triggering event wherein the triggering event is one of an occurrence of a hardware failure in one or more cells controlled by the first access node, an occurrence of a previous hardware failure being remediated, a change in total cell loading and a change in cell loading per type of service class.

14. An access node (12'), comprising:
a processor configured to determine information corresponding to a first cell associated with said access node (12'), where the information is regarding at least one of availability and capability to support one or more features of the first cell, controlled by the access node (12'), that is neighbor to a second cell controlled by a further access node (12); and
an X2 interface configured to send the information to the further access node (12) periodically or as a result of a triggering event wherein the triggering event is one of an occurrence of a hardware failure in one or more cells controlled by the first access node, an occurrence of a previous hardware failure being remediated, a change in total cell loading and a change in cell loading per type of service class.

## Patentansprüche

1. Verfahren, das Folgendes umfasst:
Empfangen von Informationen von einem ersten Zugriffsknoten (12') über eine X2-Schnittstelle an einem zweiten Zugriffsknoten (12), wobei die Informationen Verfügbarkeit und/oder Leistungsvermögen dafür betreffen, ein oder mehrere Merkmale einer ersten Zelle, die durch den ersten Zugriffsknoten (12') gesteuert wird und zu einer zweiten Zelle, die durch den zweiten Zugriffsknoten (12) gesteuert wird, benachbart ist, zu unterstützen; und
Verwenden der empfangenen Informationen an einem zweiten Zugriffsknoten (12) während mindestens eines von:
einem Einleiten einer Übergabe, wobei der zweite Zugriffsknoten (12) die empfangenen Informationen berücksichtigt, wenn er eine Bestimmung einer geeigneten Zielzelle für eine Übergabe macht; und
einem auf eine Funkbetriebsmittelsteuerung bezogenen Vorgang, RRC-bezogenen Vorgang; wobei das Verfahren ferner Folgendes umfasst:
Empfangen der Informationen periodisch oder als ein Ergebnis eines Auslöseereignisses.

2. Verfahren nach Anspruch 1, wobei das Auslöseereignis ein Auftreten eines Hardware-Fehlers in einer oder mehreren Zellen, die durch den ersten Zugriffsknoten gesteuert werden, oder ein Auftreten eines vorherigen Hardware-Fehlers, der behoben ist, oder eine Änderung der gesamten Zellenauslastung und eine Änderung der Zellenauslastung pro Typ der Dienstklasse.

3. Verfahren nach Anspruch 1 oder 2, wobei die empfangenen Informationen während des RRC-bezogenen Vorgangs verwendet werden und der RRC-bezogene Vorgang das Entfernen der ersten Zelle aus einer Zellenliste aufgrund der empfangenen Informationen ist.

4. Verfahren nach Anspruch 1 oder 2, wobei die empfangenen Informationen Informationen darüber umfassen, dass ein Merkmal durch die erste Zelle nicht unterstützt wird, und wobei die empfangenen Informationen verwendet werden, eine Übergabe an die erste Zelle mit einer Anfrage, das nicht unterstütze Merkmal nicht auszuführen, einzuleiten.

5. Verfahren nach einem vorhergehenden Anspruch, das in einem Programm verkörpert ist, das auf einem computerlesbaren Medium gespeichert ist und durch einen Prozessor ausführbar ist.

6. Zugriffsknoten (12), der Folgendes umfasst:
eine X2-Schnittstelle, die konfiguriert ist, Informationen bezüglich der Verfügbarkeit und/oder des Leistungsvermögens zu empfangen, ein oder mehrere Merkmale einer ersten Zelle, die durch einen weiteren Zugriffsknoten (12') gesteuert wird und die zu einer zweiten Zelle, die durch den Zugriffsknoten (12) gesteuert wird, benachbart ist, zu unterstützen; und
einen Prozessor, der konfiguriert ist, die empfangenen Informationen während mindestens einem der Folgenden zu verwenden:
einer Übergabe, wenn eine Bestimmung eines Zielzugriffsknotens für die Übergabe gemacht wird; und
einem auf eine Funkbetriebsmittelsteuerung bezogenen Vorgang, RRC-bezogenen Vorgang; wobei die Informationen periodisch oder als ein Ergebnis eines Auslöseereignisses empfangen werden.

7. Zugriffsknoten nach Anspruch 6, wobei das Auslöseereignis eines ist eines Auftretens eines Hardware-Fehlers in einer oder mehreren Zellen, die durch den ersten Zugriffsknoten gesteuert werden, eines Auftretens eines vorherigen Hardware-Fehlers, der behoben ist, einer Änderung der gesamten Zellenauslastung und einer Änderung der Zellenauslastung pro Typ der Dienstklasse.

8. Zugriffsknoten (12) nach Anspruch 6, wobei die Informationen Informationen umfassen, dass die erste Zelle nicht verfügbar ist.

9. Zugriffsknoten (12) nach Anspruch 6, wobei die empfangenen Informationen während des RRC-bezogenen Vorgangs verwendet werden und der RRC-bezogene Vorgang ein Entfernen der ersten Zelle aus einer Zellenliste aufgrund der empfangenen Informationen ist.

10. Zugriffsknoten (12) nach Anspruch 6, wobei die empfangenen Informationen Informationen dafür umfassen, dass ein Merkmal durch die erste Zelle nicht unterstützt wird, und wobei die Informationen verwendet werden, eine Übergabe an die erste Zelle mit einer Anfrage, das nicht unterstützte Merkmal nicht auszuführen, einzuleiten.

11. Zugriffsknoten (12) nach Anspruch 6, wobei die empfangenen Informationen berücksichtigt werden, wenn eine Bestimmung einer geeigneten Zielzelle für eine Übergabe gemacht wird.

12. Zugriffsknoten (12) nach Anspruch 6, wobei die empfangenen Informationen dafür verwendet werden, anstelle des Sendens einer Nachricht eine Übergabe mit einer geeigneten Ziel zelle einzuleiten.

13. Verfahren, das Folgendes umfasst:
Bestimmen von Informationen an einem ersten Zugriffsknoten (12'), der einer ersten Zelle entspricht, die dem ersten Zugriffsknoten (12') zugeordnet ist, wobei die Informationen Verfügbarkeit und/oder Leistungsvermögen dafür betreffen, ein oder mehrere Merkmale einer ersten Zelle, die durch den ersten Zugriffsknoten (12') gesteuert wird und die zu einer zweiten Zelle, die durch den einen zweiten Zugriffsknoten (12) gesteuert wird, benachbart ist, zu unterstützen;
Senden der Informationen über eine X2-Schnittstelle an den zweiten Zugriffsknoten (12);
Senden der Informationen periodisch oder als ein Ergebnis eines Auslöseereignisses, wobei das Auslöseereignis ein Auftreten eines Hardware-Fehlers in einer oder mehreren Zellen, die durch den ersten Zugriffsknoten gesteuert werden, oder ein Auftreten eines vorherigen Hardware-Fehlers, der behoben ist, oder eine Änderung der gesamten Zellenauslastung und eine Änderung der Zellenauslastung pro Typ der Dienstklasse.

14. Zugriffsknoten (12'), der Folgendes umfasst:
einen Prozessor, der konfiguriert ist, Informationen zu bestimmen, die einer ersten Zelle entsprechen, die dem Zugriffsknoten (12') zugeordnet ist, wobei die Informationen eine Verfügbarkeit und/oder ein Leistungsvermögen dafür betreffen, ein oder mehrere Merkmale der ersten Zelle, die durch den Zugriffsknoten (12') gesteuert wird und die zu einer zweiten Zelle, die durch einen weiteren Zugriffsknoten (12) gesteuert wird, benachbart ist, zu unterstützen,; und
eine X2-Schnittstelle, die konfiguriert ist, die Informationen an den weiteren Zugriffsknoten (12) periodisch oder als ein Ergebnis eines Auslöseereignisses zu senden, wobei das Auslöseereignis ein Auftreten eines Hardware-Fehlers in einer oder mehreren Zellen, die durch den ersten Zugriffsknoten gesteuert werden, ein Auftreten eines vorherigen Hardware-Fehlers, der behoben ist, eine Änderung der gesamten Zellenauslastung und eine Änderung der Zellenauslastung pro Typ der Dienstklasse.

## Revendications

1. Procédé comprenant :
la réception d'informations au niveau d'un second noeud d'accès (12) depuis un premier noeud d'accès (12') sur une interface X2, les informations concernant au moins l'une la disponibilité et de la capacité à supporter une ou plusieurs caractéristiques d'une première cellule commandée par le premier noeud d'accès (12') qui est voisine d'une seconde cellule commandée par le second noeud d'accès (12) ; et
l'utilisation des informations reçues au niveau d'un second noeud d'accès (12) durant au moins l'un d'un :
lancement d'un transfert dans lequel le second noeud d'accès (12) considère les informations reçues quand il détermine une cellule cible convenable pour un transfert ; et
une opération de commande de ressource radio, RRC; le procédé comprenant en outre :
la réception des informations périodiquement ou à la suite d'un événement de déclenchement.

2. Procédé selon la revendication 1, dans lequel l'événement de déclenchement est l'un d'une occurrence d'une panne matérielle dans une ou plusieurs cellules commandées par le premier noeud d'accès, d'une occurrence d'une panne matérielle antérieure solutionnée, d'un changement de la charge de cellule totale et d'un changement de charge de cellule par type de classe de service.

3. Procédé selon la revendication 1 ou 2, dans lequel les informations reçues sont utilisées durant l'opération RRC et l'opération RRC est une suppression de la première cellule d'une liste de cellules en fonction des informations reçues.

4. Procédé selon la revendication 1 ou 2, dans lequel les informations reçues comprennent des informations qu'une caractéristique n'est pas supportée par la première cellule et dans lequel les informations reçues sont utilisées pour lancer un transfert sur la première cellule avec une requête de ne pas exécuter la caractéristique non supportée.

5. Procédé selon l'une quelconque des revendications précédentes, mis en oeuvre dans un programme stocké sur un support lisible par ordinateur et exécutable par un processeur.

6. Noeud d'accès (12) comprenant :
une interface X2 configurée pour recevoir des informations concernant au moins l'une de la disponibilité et de la capacité à supporter une ou plusieurs caractéristiques d'une première cellule commandée par un autre noeud d'accès (12') qui est voisine d'une seconde cellule commandée par le noeud d'accès (12) ; et
un processeur configuré pour utiliser les informations reçues durant au moins l'un d'un :
transfert lors d'une détermination d'un noeud d'accès cible pour le transfert ; et
une opération de commande de ressource radio, RRC; dans lequel les informations sont reçues périodiquement ou à la suite d'un événement de déclenchement.

7. Noeud d'accès selon la revendication 6, dans lequel l'événement de déclenchement est l'un d'une occurrence d'une panne matérielle dans une ou plusieurs cellules commandées par le premier noeud d'accès, d'une occurrence d'une panne matérielle antérieure solutionnée, d'un changement de la charge de cellule totale et d'un changement de charge de cellule par type de classe de service.

8. Noeud d'accès (12) selon la revendication 6, dans lequel les informations comprennent des informations que la première cellule n'est pas disponible.

9. Noeud d'accès (12) selon la revendication 6, dans lequel les informations reçues sont utilisées durant l'opération RRC et l'opération RRC est une suppression de la première cellule d'une liste de cellules en fonction des informations reçues.

10. Noeud d'accès (12) selon la revendication 6, dans lequel les informations reçues comprennent des informations qu'une caractéristique n'est pas supportée par la première cellule et dans lequel les informations sont utilisées pour lancer un transfert sur la première cellule avec une requête de ne pas exécuter la caractéristique non supportée.

11. Noeud d'accès (12) selon la revendication 6, dans lequel les informations reçues sont considérées lors de la détermination d'une cellule cible convenable pour un transfert.

12. Noeud d'accès (12) selon la revendication 6, dans lequel les informations reçues sont utilisées au lieu d'envoyer un message de lancement de transfert sur une cellule cible convenable.

13. Procédé comprenant :
la détermination d'informations au niveau d'un premier noeud d'accès (12') correspondant à une première cellule associée au premier noeud d'accès (12'), les informations concernant au moins l'une la disponibilité et de la capacité à supporter une ou plusieurs caractéristiques de la première cellule commandée par le premier noeud d'accès (12') qui est voisine d'une seconde cellule commandée par un second noeud d'accès (12) ;
l'envoi des informations au second noeud d'accès (12) sur une interface X2 ;
l'envoi des informations périodiquement ou à la suite d'un événement de déclenchement, l'événement de déclenchement étant l'un d'une occurrence d'une panne matérielle dans une ou plusieurs cellules commandées par le premier noeud d'accès, d'une occurrence d'une panne matérielle antérieure solutionnée, d'un changement de la charge de cellule totale et d'un changement de charge de cellule par type de classe de service.

14. Noeud d'accès (12'), comprenant :
un processeur configuré pour déterminer des informations correspondant à une première cellule associée audit noeud d'accès (12'), les informations concernant au moins l'une de la disponibilité et de la capacité à supporter une ou plusieurs caractéristiques de la première cellule commandée par le premier noeud d'accès (12') qui est voisine d'une seconde cellule commandée par un autre noeud d'accès (12) ; et
une interface X2 configurée pour envoyer les informations à l'autre noeud d'accès (12) périodiquement ou à la suite d'un événement de déclenchement, l'événement de déclenchement étant l'un d'une occurrence d'une panne matérielle dans une ou plusieurs cellules commandées par le premier noeud d'accès, d'une occurrence d'une panne matérielle antérieure solutionnée, d'un changement de la charge de cellule totale et d'un changement de charge de cellule par type de classe de service.
